(19) Europäisches Patentamt
European Patent Office
Office européen des brevets

(11) EP 2 379 782 B1

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(21) Anmeldenummer: **09764740.8**

(22) Anmeldetag: **05.12.2009**

(51) Int Cl.:
***C25B 1/46*** *(2006.01)* ***C25B 15/00*** *(2006.01)*
***B82Y 30/00*** *(2011.01)*

(86) Internationale Anmeldenummer:
**PCT/EP2009/008699**

(87) Internationale Veröffentlichungsnummer:
**WO 2010/069490 (24.06.2010 Gazette 2010/25)**

(54) **ELEKTROCHEMISCHES VERFAHREN ZUR REDUKTION MOLEKULAREN SAUERSTOFFS**

ELECTROCHEMICAL METHOD FOR REDUCING MOLECULAR OXYGEN

PROCÉDÉ ÉLECTROCHIMIQUE DE RÉDUCTION DE L'OXYGÈNE MOLÉCULAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.12.2008 DE 102008063727**

(43) Veröffentlichungstag der Anmeldung:
**26.10.2011 Patentblatt 2011/43**

(73) Patentinhaber: **Bayer Intellectual Property GmbH**
**40789 Monheim (DE)**

(72) Erfinder:
- **ASSMANN, Jens**
  **40723 Hilden (DE)**
- **WOLF, Aurel**
  **42489 Wülfrath (DE)**
- **MLECZKO, Leslaw**
  **41542 Dormagen (DE)**
- **KARPENKO, Alexander**
  **51377 Leverkusen (DE)**
- **MICHELE, Volker**
  **51065 Köln (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
- **S. MALDONADO, K. STEVENSON: "Influence of nitrogen doping on oxygen reduction electrocatalysis at carbon nanofiber electrodes" JOURNAL OF PHYSICAL CHEMISTRY B, Bd. 109, 19. Februar 2005 (2005-02-19), Seiten 4707-4716, XP002573539**
- **P.H. MATTER, E. WANG, M. ARIAS, E.J. BIDDINGER, U.S.OZKAN: "Oxygen reduction reaction activity and surface properties of nanostructured nitrogen-containing carbon" JOURNAL OF MOLECULAR CATALYSIS A: CHEMICAL, Bd. 264, 9. September 2006 (2006-09-09), Seiten 73-81, XP002573540**
- **P.H. MATTER, L. ZHANG, U.S. OZKAN: "the role of nanostructure in nitrogen-containing carbon catalysts for the oxygen reduction reaction" JOURNAL OF CATALYSIS, Bd. 239, 10. Februar 2006 (2006-02-10), Seiten 83-96, XP002573541**
- **SHAO ET AL: "Nitrogen-doped carbon nanostructures and their composites as catalytic materials for proton exchange membrane fuel cell" APPLIED CATALYSIS B: ENVIRONMENTAL, ELSEVIER, Bd. 79, Nr. 1, 12. Oktober 2007 (2007-10-12), Seiten 89-99, XP022408685 ISSN: 0926-3373**
- **X. CHU, K.KINOSHITA: "SURFACE MODIFICATION OF CARBONS FOR ENHANCED ELECTROCHEMICAL ACTIVITY" MATERIALS SCIENCE AND ENGINEERING, Bd. B49, 5. September 1997 (1997-09-05), Seiten 53-60, XP002573542**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 379 782 B1

## Beschreibung

Die vorliegende Erfindung betrifft ein elektrochemisches Verfahren zur Reduktion molekularen Sauerstoffs in alkalischen Lösungen in Gegenwart von stickstoff-dotierten Kohlenstoffnanoröhrchen, bei dem kein Wasserstoffperoxid als Nebenprodukt der Reduktion entsteht.

Die Notwendigkeit zur elektrochemischen Reduktion molekularen Sauerstoffs in Lösungen entsteht üblicherweise im Zusammenhang etwa mit Natriumchlorid-Elektrolyseverfahren, oder etwa in Metall-Luftbatterien.

Die bei solchen elektrochemischen Reduktionsreaktionen erwünschten Reduktionsprodukte des molekularen Sauerstoffs sind üblicherweise doppelt negativ geladene Sauerstoff-Ionen, welche in wässrigen Lösungen üblicherweise in Form von Hydroxid-Ionen vorliegen. Allerdings ist es ebenfalls allgemein bekannt, dass die elektrochemische Reduktion von molekularem Sauerstoff auch ein anderes Reduktionsprodukt zur Folge haben kann, welches abhängig von den Bedingungen des Reduktionsverfahrens und in Abhängigkeit von dem Elektrodenmaterial in geringeren oder größeren Mengen gebildet werden kann. Dieses andere Reduktionsprodukt ist Wasserstoffperoxid.

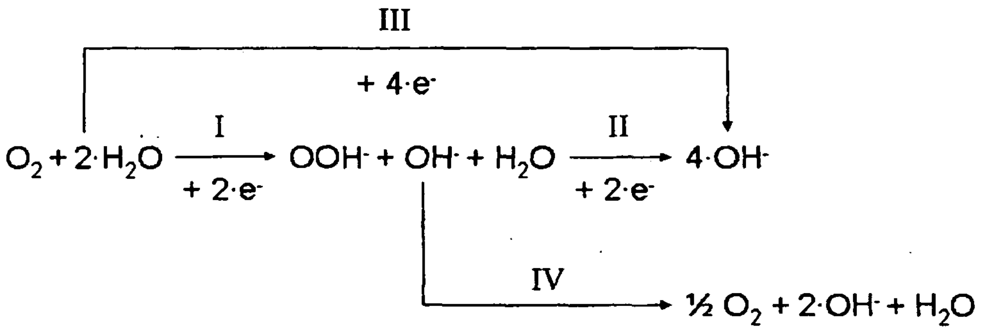


Die zuvor dargestellten Formeln (I bis IV), nach denen molekularer Sauerstoff elektrochemisch zu doppelt negativ geladenen Sauerstoff-Ionen in Form von Hydroxid-Ionen reduziert werden kann, zeigen, dass dies entweder unter Aufnahme von zweimal zwei Elektronen unter intermediärer Bildung eines Wasserstoffperoxid-Anions ($OOH^-$) gemäß den Formeln (I und II geschehen kann oder auch direkt unter Aufnahme von einmal vier Elektronen gemäß Formel (III). Die theoretisch mögliche, elektrochemische Reaktion gemäß der Formel (III) wäre vorteilhaft, wenn sie in einem Verfahren zur Reduktion molekularen Sauerstoffs vorgefunden würde. Der Grund für diese Vorteilhaftigkeit wird im Folgenden beschrieben.

Aufgrund der Autoprotolyse von Wasser würde in wässrigen Lösungen automatisch neben dem vorgenannten Wasserstoffperoxid-Anion auch Wasserstoffperoxid vorliegen.

Wasserstoffperoxid ist aufgrund seiner korrosiven und oxidativen Eigenschaften im Allgemeinen ein unerwünschtes Nebenprodukt bei der Reduktion von molekularem Sauerstoff.

Außerdem kann es bei einem Vorliegen von Wasserstoffperoxid gemäß einer Disproportionierungsreaktion ohne die Aufnahme weiterer Elektronen kommen, bei denen ein Anteil molekularen Sauerstoffs mitgebildet wird, was im Sinne der weiteren Reduktion desselben unerwünscht ist.

Die Möglichkeit der Wasserstoffperoxidbildung setzt der Auswahl der Elektrodenmaterialien für die elektrochemische Reduktion von molekularem Sauerstoff aus den vorgenannten Gründen bezüglich der korrosiven Eigenschaften des Wasserstoffperoxid im Allgemeinen recht enge Grenzen.

Auf den Einsatz von preiswerten etwa Kohlenstoffmaterialien wie Ruß oder Graphit als Trägermaterial für andere Elektrodenmaterialien wird häufig gänzlich verzichtet, weil diese allgemein die Reaktion gemäß der Formel (I) befördern und damit zu stark verminderten Lebenszeiten der Elektroden führen. Weiter ist hiermit durch die Möglichkeit der Disproportionierungsreaktion gemäß Formel (IV) die Menge doppelt negativ geladenen Sauerstoff-Ionen, etwa in Form von Hydroxid-Ionen, geringer.

So offenbaren O. Ichinose et al. in "Effect of silver catalyst on the activity and mechanism of a gas diffusion type oxygen cathode for chlor-alkali electrolysis", im Journal of Applied Electrochemistry 34: 55-59 (2004), dass die Verwendung von Ruß und insbesondere Elektroden aus reinem Ruß dazu führen, dass Wasserstoffperoxid in großen Mengen beim Versuch der elektrochemischen Reduktion molekularen Sauerstoffs gebildet wird.

Es wird weiter offenbart, dass eine elektrochemische Reduktion von molekularem Sauerstoff in Gegenwart eines Katalysatormaterials in Form eines mit Silber beladenen Rußträgers oder eines reinen Rußträgers in einer 32 Gew.%igen Natronlaugenlösung bei Temperaturen von 60°C oder 80°C ausgeführt werden kann. Hierbei führt die Bildung von Wasserstoffperoxid am Rußmaterial zu Rissbildungen in der Elektrode, was als nachteilig anerkannt wird. O. Ichinose et al. erklären, dass die Übertragung von nur zwei Elektronen auf den molekularen Sauerstoff hin zur Übertragung von vier Elektronen durch die Addition von Silber zum Ruß verbessert werden kann, so dass weniger

Wasserstoffperoxid gebildet wird, was wiederum von Vorteil ist.

Die in der Offenbarung von O. Ichinose et al. vorgestellten Verfahrensvarianten sind allerdings dahingehend nachteilig, als dass zur Erzielung des gewünschten Übertrags von vier Elektronen die Addition von Silber in das Elektrodenmaterial erforderlich ist. Silber jedoch ist ein Edelmetall, dessen Verwendung als Bestandteil von Elektroden wirtschaftlich unattraktiv ist. Weiter ist eine vollständige Unterdrückung der Bildung von Wasserstoffperoxid nicht möglich, da stets Anteile des molekularen Sauerstoff mit dem Rußträger in Kontakt kommen und dort gemäß der Formel (I) zu Wasserstoffperoxid in der wässrigen Lösung reduziert werden. Dieser ist wiederum geeignet das Elektrodenmaterial zu schädigen.

Zu einem ähnlichen Schluss, wie O. Ichinose et al. bzgl. der Bildung von Wasserstoffperoxid kommen auch L. Lipp in "Peroxide formation in a zero-gap chlor-alkali cell with an oxygendepolarized cathode", im Journal of Applied Electrochemistry 35:1015-1024 (2005). Allerdings stellen L. Lipp et al. fest, dass die beschriebenen Effekte auch bei einer mit Platin beladenen Elektrode, enthaltend Ruß, auftreten. Es wird weiter offenbart, dass durch Anlegen höherer Spannungen und/oder höherer Stromdichten ein Teil des entstandenen Wasserstoffperoxids weiter zu den gewünschten, doppelt negativ geladenen Sauerstoff-Ionen, etwa in Form von Hydroxid-Ionen, reduziert werden kann. Damit wird also die Möglichkeit der Folge von Reaktionen gemäß der Formeln (I) und (II) beschrieben. Da aber die Reaktion gemäß der Formel (I) stattfindet, ist die Reaktion gemäß der Formel (IV) ebenfalls nicht auszuschließen, was wiederum zu einer Verringerung der Ausbeute an doppelt negativ geladenen Sauerstoff-Ionen in Form vorgenannter Hydroxid-Ionen führt. Die in L. Lipp et al. offenbarten Verfahrensvarianten weisen also die gleichen wirtschaftlichen und technischen Nachteile auf, wie jene in der Offenbarung gemäß O. Ichinose et al.

Eine Weiterentwicklung von Verfahren zur Reduktion molekularen Sauerstoffs offenbaren P. Matter et al. in "Oxygen reduction reaction activity and surface properties of nanostructured nitrogen-containing carbon", im Journal of Molecular Catalysis A: Chemical 264: 73-81 (2007). Hierin wird gefunden, dass Stickstoff enthaltende Kohlenstoffmodifikationen, die durch katalytische Abscheidung von Dämpfen aus Acetonitril auf Trägermaterialien, wie Silziumdioxid, Magnesiumoxid die wiederum Eisen, Kobalt oder Nickel als katalytisch aktive Komponente enthalten, erhalten werden, eine katalytische Aktivität für die Reduktion molekularen Sauerstoffs aufweisen. Das Verfahren zur Reduktion molekularen Sauerstoffs, das P. Matter et al. offenbaren, ist dadurch gekennzeichnet, dass es in einer 0,5 molaren Schwefelsäurelösung ausgeführt wird.

Es wird auch offenbart, dass in Abhängigkeit von dem Trägermaterial und/oder von der hierauf befindlichen katalytisch aktiven Komponente zur Herstellung der Stickstoff enthaltenden Kohlenstoffmodifikationen eine mehr oder minder große Menge an Wasserstoffperoxid als Nebenprodukt gebildet wird. Allgemein wird seitens P. Matter et al. jedoch vermutet, dass eine Bildung von Wasserstoffperoxid durch die Stickstoff enthaltenden Kohlenstoffmodifikationen weniger eintritt, als durch die vorgenannten anderen Bestandteile, welche aus deren Herstellungsverfahren stammen.

P. Matter et al. offenbaren weiter, dass die Stickstoff enthaltenden Kohlenstoffmodifikationen, die aktiv für die elektrochemische, katalysierte Reduktion von molekularem Sauerstoff sind, Anteile an pyridinischem und quarternärem Stickstoff aufweisen.

P. Matter et al. offenbaren nicht, dass die vorgenannte Reduktion molekularen Sauerstoffs auch in alkalischen Lösungen möglich sei. Des Weiteren findet gemäß den in P. Matter et al. offenbarten Verfahrensvarianten durch die Anwesenheit von Wasserstoffperoxid nach dessen Bildung durch die Reaktion gemäß Formel (I) die Disproportionierungsreaktion gemäß der Formel (IV) ebenfalls statt, was die Menge an doppelt negativ geladenen Sauerstoff-Ionen, etwa in Form von Hydroxid-Ionen, verringert.

Das in P. Matter et al. offenbarte Verfahren ist daher als nachteilig zu bezeichnen, als dass es zum einen keine Übertragbarkeit des Verfahrens auf technisch relevante Verfahren, wie etwa die Natriumchlorid-Elektrolyseverfahren erlaubt, in denen die elektrochemische Reduktion von molekularem Sauerstoff von großer Wichtigkeit ist und welche im Allgemeinen in alkalischen Medien ausgeführt werden und als dass es zum zweiten eine Bildung von Wasserstoffperoxid nicht verhindern kann, wodurch die Ausbeute an doppelt negativ geladenen Sauerstoff-Ionen, etwa in Form von Hydroxid-Ionen, durch die Reaktion gemäß der Formel (IV) verringert wird.

In einer Zusammenfassung des Standes der Technik bezüglich der katalytischen Eigenschaften von Stickstoff enthaltenden Kohlenstoffmodifikationen offenbaren Y. Shao et al. in "Nitrogen-doped carbon nanostructures and their composites as catalytic materials for proton exchange membrane fuel cell" im Applied Catalysis B: Environmental 79: 89-99 (2008), dass die vorgenannten Stickstoff enthaltenden Kohlenstoffmodifikationen allgemein auch in alkalischen Lösungen zur Reduktion von molekularem Sauerstoff geeignet seien.

Konkret wird aber festgehalten, dass in den bisher offenbarten Verfahren eine Zersetzung von Wasserstoffperoxid zu doppelt negativ geladenen Sauerstoff-Ionen stattfindet. Eine Zersetzung kann demnach nur als das Vorliegen einer Disproportionierungsreaktion gemäß der Formel (IV) verstanden werden, welche die Ausbeute doppelt negativ geladener Sauerstoff-Ionen, etwa in Form von Hydroxid-Ionen, in der zuvor beschriebenen Weise verringert und daher nachteilig ist. Es handelt sich also in jedem Fall um einer Reaktionsfolge gemäß der Formeln (I, II und IV).

Es wird nicht offenbart, dass eine direkte Reduktion molekularen Sauerstoffs zu zwei doppelt negativ geladenen Sauerstoff-Ionen ohne Bildung des Zwischenprodukts Wasserstoffperoxid stattfindet.

Die von Y. Shao et. al. offenbarten Verfahrensvarianten sind im Allgemeinen außerdem ebenso nachteilig, wie jene bei denen eine Zersetzung des Wasserstoffperoxids nicht stattfindet, da in jedem Fall Wasserstoffperoxid gebildet wird, das in der vorgenannten Weise die verwendeten Elektrodenmaterialien schädigen kann.

Y. Shao et al. nehmen etwa Bezug auf S. Maldonado et al., die in "Influence of Nitrogen Doping on Oxygen Reduction Electrocatalysis at Carbon Nanofiber Electrodes", im Journal of Physical Chemistry B 109: 4707-4716 (2005) offenbaren, dass es möglich ist Wasserstoffperoxid mit Stickstoff enthaltenden Kohlenstoffmodifikationen zu den gewünschten doppelt negativ geladenen Sauerstoff-Ionen zu disproportionieren.

Es wird weiter offenbart, dass diese Disproportionierung Defekten der Kohlenstoffstruktur, hervorgerufen durch die Stickstoffdotierung, zuzuschreiben ist. Die vorgenannte Disproportionierung von Wasserstoffperoxid zu doppelt negativ geladenen Sauerstoffionen wird gemäß der Offenbarung von S. Maldonado et al. in Kaliumnitratlösungen oder in Kaliumhydroxidlösungen ausgeführt. Auch hieraus folgt, dass die in S. Maldonado et al. offenbarten Verfahrensvarianten eine Reaktionsfolge gemäß der Formeln (I, II und gegebenenfalls IV) umfassen. S. Maldonado stellen darüber hinaus fest, dass in Lösungen eines pH-Wertes kleiner 10 explizit eine Reaktion gemäß der Formel (I) stattfindet, wobei die Geschwindigkeit der Reduktion durch das adsorbierte Superoxid (ein einfach negativ geladenes, molekulares Sauerstoffradikal) bestimmt wird. Es wird weiter offenbart, dass in Lösungen eines pH-Werts größer als 10 der Adsorptionsprozess des vorgenannten Superoxids behindert ist. Auch hier wird aber eine Reaktion gemäß der Formel (I) und nachfolgend gemäß der Formel (IV) offenbart, wenngleich diese langsamer abläuft.

Demzufolge offenbaren auch S. Maldonado nicht, dass eine direkte Reduktion des molekularen Sauerstoffs ohne die intermediäre Bildung von Peroxidverbindungen stattfinden kann, was zu den vorgenannten Nachteilen solcher Verfahren führt.

Es besteht daher die Aufgabe, ein Verfahren zur Reduktion molekularen Sauerstoffs bereitzustellen, welches vorgenannte Reduktion ohne die Bildung von Wasserstoffperoxid in alkalischen Lösungen erlaubt.

Es wurde überraschend gefunden, dass ein Verfahren zur elektrochemischen Reduktion molekularen Sauerstoffs zu doppelt negativ geladenen Sauerstoff-Ionen in Lösungen eines pH-Wertes größer oder gleich 8, dadurch gekennzeichnet, dass der molekulare Sauerstoff in solchen Lösungen mit stickstoff-dotierten Kohlenstoffnanoröhrchen mit einem Anteil an pyridinischem und quarternären Stickstoff unter Anlegen einer Spannung in Kontakt gebracht wird, diese Aufgabe zu lösen vermag.

Die vorgenannten doppelt negativ geladenen Sauerstoff-Ionen bezeichnen im Zusammenhang mit der vorliegenden Erfindung auch doppelt negativ geladene Sauerstoff-Ionen, welche in den vorgenannten Lösungen eines pH-Wertes größer oder gleich 8 an Wasserstoff Ionen gebunden vorliegen können. Solche Verbindungen sind etwa Hydroxid Anionen ($OH^-$) oder Wasser ($H_2O$).

Im Folgenden, wie auch vorstehend, wird auf verschiedene Anionen des Sauerstoffs Bezug genommen. Die vorgenannten doppelt negativ geladenen Sauerstoff-Ionen (Anionen) können wie gerade beschrieben auch gebunden an Wasserstoff Ionen vorliegen, ohne dass hierdurch die Wirkweise der vorliegenden Erfindung beeinträchtigt würde.

In gleicher Weise gilt dies, wenn im Rahmen der vorliegenden Erfindung auf Wasserstoffperoxid Bezug genommen wird. Unter Wasserstoffperoxid wird also hier sowohl ein doppelt negativ geladenes Sauerstoffmolekül mit zwei Sauerstoffatomen ($O_2^{2-}$), wie auch ein doppelt negativ geladenes Sauerstoffmolekül mit zwei Sauerstoffatomen und einem Wasserstoff Ion ($HO_2^-$), als auch ein doppelt negativ geladenes Sauerstoffmolekül mit zwei Sauerstoffatomen und zwei Wasserstoff Ionen ($H_2O_2$) verstanden. Alle vorgenannten Formen des Wasserstoffperoxids sollen im Rahmen des hier offenbarten Verfahrens nicht gebildet werden.

Das erfindungsgemäße Verfahren ermöglicht es erstmals eine Reduktion des molekularen Sauerstoffs, der in der Lösung eines pH-Werts größer oder gleich 8 molekular gelöst vorliegt, direkt zu doppelt negativ geladenen Sauerstoff-Ionen auszuführen.

Es werden also gemäß dem erfindungsgemäßen Verfahren bei Kontakt des molekularen Sauerstoffs mit den stickstoff-dotierten Kohlenstoffnanoröhrchen mit einem Anteil an pyridinischem und quarternären Stickstoff mittels Anlegen einer Spannung vier Elektronen übertragen, so dass die gewünschten doppelt negativ geladenen Sauerstoff-Ionen erhalten werden, ohne dass eine intermediäre Bildung von Wasserstoffperoxid stattfindet.

Dies ist besonders vorteilhaft, weil durch den Ausschluss der Möglichkeit der Wasserstoffperoxidbildung die Lebensdauer von Elektroden, die im Zuge der Anwendung des Verfahrens verwendet werden, verlängert wird, da diese keinem korrosiven Angriff des Wasserstoffperoxids mehr ausgesetzt sind. Außerdem wird durch den Ausschluss des Vorliegens einer Disproportionierungsreaktion gemäß der Formel (IV), mangels Vorliegen von Wasserstoffperoxid, die Ausbeute der Reduktion molekularen Sauerstoffs zu doppelt negativ geladenen Sauerstoff-Ionen maximiert.

Die im erfindungsgemäßen Verfahren verwendeten stickstoff-dotierten Kohlenstoffnanoröhrchen weisen üblicherweise einen Durchmesser von 3 bis 150 nm, bevorzugt von 4 bis 100 nm und besonders bevorzugt von 5 bis 50 nm auf.

Zudem weisen die im erfindungsgemäßen Verfahren verwendeten stickstoff-dotierten Kohlenstoffnanoröhrchen üblicherweise ein Verhältnis von Länge zu Durchmesser (Aspektverhältnis) von mindestens 2, bevorzugt mindestens 5, besonders bevorzugt mindestens 10 auf.

Die erfindungsgemäßen und bevorzugten Durchmesser und Aspektverhältnisse der stickstoff-dotierten Kohlenstoffnanoröhrchen sind vorteilhaft, da hohe Aspektverhältnisse gepaart mit den geringen Durchmessem der stickstoff-dotierten Kohlenstoffnanoröhrchen zu besonders hohen spezifischen Oberflächen pro Massse an stickstoff-dotierten Kohlenstoffnanoröhrchen führen und zudem insbesondere die Außenflächen der stickstoff-dotierten Kohlenstoffnanoröhrchen für die vorgenannte Übertragung von vier Elektronen gemäß der Formel (III) besonders geeignet sind.

In einer bevorzugten Ausführungsform des erfindungsgemäßen Verfahrens enthalten die stickstoff-dotierten Kohlenstoffnanoröhrchen pyridinischen und quarternären Stickstoff in einem Verhältnis größer oder gleich 1, bevorzugt größer oder gleich 1,5, besonders bevorzugt größer oder gleich 2.

In einer weiteren bevorzugten Ausführungsform des erfindungsgemäßen Verfahrens enthalten die stickstoff-dotierten Kohlenstoffnanoröhrchen hierzu einen Anteil von größer 1 Atom-% Stickstoff.

Die vorgenannten Anteile und Modifikationen können durch den Fachmann in allgemein bekannter Weise ermittelt werden. Als Beispiel für die Ermittlung der Modifikationen und ihres Verhältnisses sei die Elektronenspektroskopie zur Chemischen Analyse (ESCA) genannt. Der Anteil an Stickstoff an den Kohlenstoffnanoröhrchen ist im Zuge Ihrer Herstellung durch den Fachmann in einfacher Weise einzustellen.

Ohne an eine Theorie diesbezüglich gebunden zu sein, scheint es, als würden insbesondere oberflächliche pyridinische Modifikationen in bestimmter Kombination mit quarternären Modifikationen die Elektronenübertragung gemäß der Reaktion nach Formel (III) in alkalischen Lösungen eines pH-Werts größer oder gleich 8 besonders zu befördern.

Diese pyridinischen und quarternären Modifikationen treten offenbar insbesondere bei längeren stickstoff-dotierten Kohlenstoffnanoröhrchen (d.h. bei solchen mit einem besonders hohen Aspektverhältnis) vermehrt auf der Oberfläche der stickstoff-dotierten Kohlenstoffnanoröhrchen auf.

Die Tatsache, ob es sich bei der Reduktion des molekularen Sauerstoffs um eine Reaktion gemäß der Formeln (I, II und gegebenenfalls IV) oder um eine Reduktion des molekularen Sauerstoffs gemäß der Formel (III) handelt, kann durch den Fachmann ebenfalls in einfacher Weise überprüft werden.

Eine Methode hierfür ist die Aufnahme sogenannter Koutecky-Levich-Diagramme. Auch wenn diese Methode allgemein bekannt sein sollte, wird an dieser Stelle noch einmal in allgemeiner Weise beschrieben, wie der Fachmann die Unterscheidung zwischen einem Verfahren unter Vorliegen einer Reaktion gemäß Formeln (I, II und gegebenenfalls IV) und einer Reaktion gemäß der Formel (III) ausführen kann.

Der Bestimmung liegt die Formel (V) zu Grunde, in welcher ein Grenzstrom ($i_{Diff}$, [A]) in Abhängigkeit der Anzahl der Elektronen (*n,* [-]) einer elektrochemischen Reaktion, die bei der Reaktion an der Oberfläche einer Ringscheibenelektrode, wie sie dem Fachmann allgemein bekannt sein sollte, ausgetauscht werden, in Abhängigkeit der Faraday-Konstanten $(F \approx 96.485,34 \frac{C}{mol})$, in Abhängigkeit des binären Diffusionskoeffizienten des Stoffes zu/von dem Elektronen an die Elektrode aufgenommen/abgegeben werden (*D*, $[\frac{m^2}{s}]$) im Elektrolyten, in s dem dieser gelöst vorliegt, in Abhängigkeit der kinematischen Viskosität des vorgenannten Elektrolyten (*v*, $[\frac{m^2}{s}]$), in Abhängigkeit der Konzentration des Stoffes zu/von dem Elektronen an die Elektrode aufgenommen/abgegeben werden im Elektrolyten (*c*, $[\frac{mol}{m^3}]$), in Abhängigkeit der Fläche der Ringscheibenelektrode (*A*, [$m^2$]) und in Abhängigkeit der Rotationsgeschwindigkeit der Ringscheibenelektrode (ω, [$s^{-1}$]).

$$i_{Diff} = 0{,}63 \cdot n \cdot F \cdot D^{\frac{2}{3}} \cdot \upsilon^{-\frac{1}{6}} \cdot c \cdot A \cdot \omega^{\frac{1}{2}} \qquad \text{(V)}$$

Wie allgemein bekannt, wird eine elektrochemische Reaktion an einer Ringscheibenelektrode bei höheren Stromdichten letztendlich durch die Sauerstoffdiffusion im die Ringscheibenelektrode umgebenden Elektrolyten hin zur Elektrodenoberfläche limitiert. Hieraus folgt die Bezeichnung von $i_{Diff}$ als Grenzstrom, oder, bezogen auf die Elektrodenoberfläche *A*, als Grenzstromdichte.

Wird für eine Ringscheibenelektrode der Grenzstrom $i_{Diff}$ bei unterschiedlichen Rotationsgeschwindigkeiten ω der Ringscheibenelektrode ermittelt und dann dieser Grenzstrom $i_{Diff}$ als Funktion der Rotationsgeschwindigkeit ω der Ringscheibenelektrode aufgetragen, so ergibt sich zumindest näherungsweise eine lineare Abhängigkeit gemäß der

Formel (VI):

$$i_{Diff} = K \cdot \omega^{\frac{1}{2}} \quad (VI)$$

Die Steigung des somit erhaltenen Koutecky-Levich-Diagramms ist in linearisierter Weise der konstante Faktor *K*, welcher abgelesen werden kann.

Die Kombination der Formeln (V) und (VI), zusammen mit dem damit bekannten konstanten Faktor *K* , führt dazu, dass ein einfacher mathematischer Zusammenhang erhalten wird, in dem nur die Anzahl der Elektronen *n*, welche übertragen werden, nicht bekannt ist. Durch einfaches Umstellen der Gleichung erhält man so den Wert für *n* und kann damit ermitteln, ob eine Reaktion gemäß der Formeln (I, II und gegebenenfalls IV) oder gemäß der Formel (III) vorliegt. Das vorliegende Verfahren ist besonders vorteilhaft, weil bei einer solchen Bestimmung für das erfindungsgemäße Verfahren für *n* eine Zahl recht nahe an 4 erhalten wird. In den besonders bevorzugten Ausführungsformen der vorliegenden Erfindung ist die Zahl sogar beinahe exakt 4. Abweichungen hiervon liegen vor allem in den in der Formel (V) enthaltenen nicht vollständig exakten Werten der verwendeten Konstanten, wie etwa *F* , *D* und $\upsilon$ begründet. Außerdem ist die Konzentration von Sauerstoff *c* in Lösungen eines pH-Werts größer oder gleich 8, gemäß dem erfindungsgemäßen Verfahren nicht so exakt bestimmbar, wie dies hier für die Ermittlung des exakten Werts 4 notwendig wäre.

Die gemäß des erfindungsgemäßen Verfahrens und seiner bevorzugten Ausführungsformen verwendeten stickstoff-dotierten Kohlenstoffnanoröhrchen können gemäß der Verfahren nach dem Stand der Technik hergestellt werden, wenn die vorgenannten Eigenschaften der stickstoff-dotierten Kohlenstoffnanoröhrchen hieraus erhalten werden.

In einer bevorzugten Ausführungsform der vorliegenden Erfindung werden die stickstoff-dotierten Kohlenstoffnanoröhrchen aus den Verfahren gemäß der deutschen Patentanmeldung mit der Anmeldenummer DE 10 2007 062 421.4 erhalten. Geeignete Katalysatoren zur Herstellung von stickstoff-dotierten Kohlenstoffnanoröhrchen werden aber auch in der WO 2007 093 337 offenbart.

In einer besonders bevorzugten Ausführungsform der vorliegenden Erfindung werden die stickstoff-dotierten Kohlenstoffnanoröhrchen aus den Verfahren gemäß der deutschen Patentanmeldung mit der Anmeldenummer DE 10 2007 062 421.4 erhalten, bei denen die Temperatur zur Herstellung der stickstoff-dotierten Kohlenstoffnanoröhrchen etwa 650°C beträgt und bei denen das Kohlenstoff und Stickstoff umfassende Edukt Pyridin ist.

Die vorgenannten stickstoff-dotierten Kohlenstoffnanoröhrchen werden, um ganz besonders bevorzugte Verfahrensvarianten zu ermöglichen, nachfolgend noch von gegebenenfalls noch enthaltenen Resten an Katalysatormaterial befreit.

Das Befreien kann durch das Waschen der stickstoff-dotierten Kohlenstoffnanoröhrchen mit einer Säure erfolgen. Bevorzugt ist die Säure Salzsäure.

Das Befreien der stickstoff-dotierten Kohlenstoffnanoröhrchen vom Katalysatormaterial ist besonders vorteilhaft, weil hierdurch die Reste an Katalysatormaterial nicht mehr als mögliche, katalytisch aktive Komponenten für eine eventuelle Reduktion molekularen Sauerstoffs zu Wasserstoffperoxid gemäß der Formel (II) zur Verfügung stehen.

In einer weiteren besonders bevorzugten Ausführungsform des erfindungsgemäßen Verfahrens zur Reduktion molekularen Sauerstoffs sind die stickstoff-dotierten Kohlenstoffnanoröhrchen frei von Metall- oder Halbmetallbestandteilen, wie etwa Fe, Ni, Cu, W, V, Cr, Sn, Co, Mn und Mo.

Das erfindungsgemäße Verfahren wird üblicherweise bei Anlegen einer Spannung von +0,2 bis -0,8 V zwischen einer Silber/Silberchlorid-Referenzelektrode (Ag/AgCl-Referenzelektrode) und einer Elektrode umfassend die vorgenannten stickstoff-dotierten Kohlenstoffnanoröhrchen mit einem Anteil an pyridinischem und quarternären Stickstoff ausgeführt, wobei die Reduktion des molekularen Sauerstoffs gemäß dem erfindungsgemäßen Verfahren an der Oberfläche der Elektrode umfassend die stickstoff-dotierten Kohlenstoffnanoröhrchen mit einem Anteil an pyridinischem und quarternären Stickstoff stattfindet. Die hier angegebene Spannung ist bezogen auf eine Ag/AgCl-Referenzelektrode, wie Sie der Fachmann allgemein kennt. Ausgehend hiervon ist die Umrechnung auf die notwendige Spannung zwischen der Elektrode umfassend die vorgenannten stickstoff-dotierten Kohlenstoffnanoröhrchen mit einem Anteil an pyridinischem und quarternären Stickstoff und der Referenzelektrode für andere. Referenzelektroden für den Fachmann in einfacher Weise möglich.

Es wurde weiter überraschend gefunden, dass sich das erfindungsgemäße Verfahren durch eine verringerte elektrische Leistungsaufnahme bei ansonsten gleicher Ausbeute an doppelt negativ geladenen Sauerstoff-Ionen auszeichnet, was unter anderem darin begründet liegt, dass die Übertragung von vorgenannten vier Elektronen gemäß dem hier vorgestellten Verfahren bei geringeren Spannungen bereits vonstatten geht, als dies bei Verfahren nach dem Stand der Technik, etwa unter Verwendung von Leitruß, der Fall wäre. Das bedeutet, dass die im erfindungsgemäßen Verfahren beobachteten Überspannungen an der Elektrodenoberfläche, welche beobachtet werden können, erfreulich

gering sind.

Die Stromdichten, ausgedrückt in Ampere pro Elektrodenoberfläche der Elektrode umfassend die vorgenannten stickstoff-dotierten Kohlenstoffnanoröhrchen mit einem Anteil an pyridinischem und quarternärem Stickstoff richten sich im Wesentlichen nach der oben angegebenen Spannung, oder nach der vorgenannten Diffusionsgeschwindigkeit unter Anlegen der vorgenannten Spannung und sind im erfindungsgemäßen Verfahren oder in Verfahren nach bevorzugten Varianten in vorteilhafter Weise hoch bei geringen Spannungen, da in einem Schritt vier Elektronen bereits bei geringen Spannungen übertragen werden.

Die vorgenannten Bereiche an Spannung und Stromdichte sind also besonders vorteilhaft, weil in diesen das erfindungsgemäße Verfahren unter Aufwendung einer, gemessen an der Reduktion molekularen Sauerstoffs, minimalen Menge an elektrischer Leistung ausgeführt werden kann.

Insbesondere die erfindungsgemäß verwendeten stickstoff dotierten Kohlenstoffnanoröhrchen mit einem Anteil an pyridinischem und quarternären Stickstoff in Lösungen eines pH-Werts größer als 8 ermöglichen eine solche Minimierung der aufgewendeten Energie, indem sie die für die Reduktion minimal benötigte Spannung (die Zellspannung) verringern.

Ein weiterer Gegenstand der vorliegenden Erfindung ist die Verwendung von stickstoff-dotierten Kohlenstoffnanoröhrchen mit einem Anteil an pyridinischem und quarternären Stickstoff zur Reduktion molekularen Sauerstoffs in wässrigen Lösungen eines pH-Werts größer als 8.

Ein letzter Gegenstand der vorliegenden Erfindung ist eine Elektrolysevorrichtung für die elektrochemische Reduktion von molekularem Sauerstoff zu doppelt negativ geladenen Sauerstoff Ionen, dadurch gekennzeichnet, dass sie einen ersten Elektrodenraum (1), gefüllt mit einer Lösung eines pH-Wertes größer oder gleich 8 umfasst, in dem sich eine Elektrode (1a) umfassend einen Anteil stickstoff-dotierter Kohlenstoffnanoröhrchen mit einem Anteil an pyridinischem und quarternären Stickstoff befindet, die mit einer weiteren Elektrode (2a) in einem weiteren Elektrodenraum (2) elektrisch leitend über eine Spannungsquelle (3) verbunden ist und wobei sich zwischen dem ersten und dem weiteren Elektrodenraum eine Membran (4) befmdet.

In der erfindungsgemäßen Vorrichtung kann das erfindungsgemäße Verfahren besonders vorteilhaft ausgeführt werden.

Die vorliegende Erfindung wird anhand der Abbildungen erläutert, ohne sie jedoch hierauf zu beschränken.

Fig. 1 zeigt ein Koutecky-Levich-Diagramm erhalten aus den Messdaten des erfindungsgemäßen Verfahrens nach Beispiel 1. Dargestellt ist der Grenzstrom $i_{Diff}$ in Mikroampere über der Wurzel der Rotationsgeschwindigkeit $\omega^{\frac{1}{2}}$ der Ringscheibenelektrode in $\sqrt{\min^{-1}}$. Die dargestellten Messpunkte beziehen sich auf die Rotationsgeschwindigkeiten der Ringscheibenelektrode von 400 $min^{-1}$ über 900 $min^{-1}$ bis 1600 $min^{-1}$. Die dargestellte Linie ist eine lineare Approximation zur Bestimmung des Faktors *K* gemäß der Formel (VI), der zu 20,7 erhalten wird.

Fig. 2 zeigt eine Gegenüberstellung der mittels Ringscheibenelektrode gegen eine Ag/AgCI-Referenzelektrode aufgenommenen Messdaten bei einer Umdrehungsgeschwindigkeit von 3600 $min^{-1}$ der Ringscheibenelektrode im Fall des nicht erfindungsgemäßen Verfahrens gemäß dem Vergleichsbeispiel 1 (Linie B) und im Fall des erfindungsgemäßen Verfahrens gemäß dem Beispiel 1 (Linie A).

Fig. 3 zeigt ein Koutecky-Levich-Diagramm erhalten aus den Messdaten des erfindungsgemäßen Verfahrens nach Beispiel 2. Dargestellt ist der Grenzstrom $i_{Diff}$ in Mikroampere über der Wurzel der Rotationsgeschwindigkeit $\omega^{\frac{1}{2}}$ der Ringscheibenelektrode in $\sqrt{\min^{-1}}$. Die dargestellten Messpunkte beziehen sich auf die Rotationsgeschwindigkeiten der Ringscheibenelektrode von 400 $min^{-1}$ über 900 $min^{-1}$ und 1600 $min^{-1}$bis 2500 $min^{-1}$. Die dargestellte Linie ist eine lineare Approximation zur Bestimmung des Faktors K gemäß der Formel (VI), der zu 17,4 erhalten wird.

Fig. 4 zeigt ein Koutecky-Levich-Diagramm erhalten aus den Messdaten des erfindungsgemäßen Verfahrens nach Beispiel 3. Dargestellt ist der Grenzstrom $i_{Diff}$ in Mikroampere über der Wurzel $\omega^{\frac{1}{2}}$ der Rotationsgeschwindigkeit der Ringscheibenelektrode in $\sqrt{\min^{-1}}$. Die dargestellten Messpunkte beziehen sich auf die Rotationsgeschwindigkeiten der Ringscheibenelektrode von 400 $min^{-1}$ über 900 $min^{-1}$ und 1600 $min^{-1}$ bis 2500 $min^{-1}$. Die dargestellte Linie ist eine lineare Approximation zur Bestimmung des Faktors *K* gemäß der Formel (VI), der zu 20,1 erhalten wird.

Fig. 5 zeigt ein Koutecky-Levich-Diagramm mit allen Messdaten aus den erfindungsgemäßen Verfahren gemäß den Beispielen 1 bis 3, sowie aus den nicht erfindungsgemäßen Verfahren gemäß den Vergleichsbeispielen 2 und 3. Die Daten aus dem erfindungsgemäßen Verfahren gemäß Beispiel 1 sind als gefüllte Kreise dargestellt, deren lineare

Approximation zur Bestimmung des Faktors *K* gemäß der Formel (VI) als dicke durchgezogene Linie. Die Daten aus dem erfindungsgemäßen Verfahren gemäß Beispiel 2 sind als gefüllte Vierecke dargestellt, deren lineare Approximation zur Bestimmung des Faktors *K* gemäß der Formel (VI) als dünne durchgezogene Linie. Die Daten aus dem erfindungsgemäßen Verfahren gemäß Beispiel 3 sind als gefüllte Dreiecke dargestellt, deren lineare Approximation zur Bestimmung des Faktors *K* gemäß der Formel (VI) als schattierte durchgezogene Linie. Die jeweiligen linearen Approximationen der erfindungsgemäßen Verfahren gemäß den Beispielen 1 bis 3 sind entsprechend mit den Ziffern 1 bis 3 zusätzlich gekennzeichnet. Die Daten aus dem nicht erfindungsgemäßen Verfahren gemäß Vergleichsbeispiel 2 sind als leere Vierecke dargestellt, deren lineare Approximation zur Bestimmung des Faktors *K* gemäß der Formel (VI) als dünne gestrichelte Linie. Die Daten aus dem nicht erfindungsgemäßen Verfahren gemäß Vergleichsbeispiel 3 sind als leere Kreise dargestellt, deren lineare Approximation zur Bestimmung des Faktors *K* gemäß der Formel (VI) als dicke Strichpunktlinie.

Fig. 6 zeigt eine erfindungsgemäße Vorrichtung mit einer ersten Elektrode (1a) umfassend eine Oberflächenschicht (1a') mit Stickstoff-dotierten Kohlenstoffnanoröhrchen mit einem Anteil an pyridinischem und quarternären Stickstoff in einem ersten Elektrodenraum (1), der mit einer 0,2 M NaOH Lösung mit einem pH-Wert von 13,31 befüllt ist. Getrennt durch eine Membran (4) befindet sich hiervon ein weiterer Elektrodenraum (2) mit einer Titanelektrode (2a), wobei der Elektrodenraum (2) mit einer 0,5 Gew.-% Natriumchloridlösung befüllt ist und wobei die Titanelektrode (2a) mit der ersten Elektrode (1a) elektrisch leitend über eine Spannungsquelle (3) verbunden ist.

Die vorliegende Erfindung wird weiterhin anhand des nachfolgenden Beispiele näher erläutert, ohne sie hierauf zu beschränken.

## <u>Beispiele</u>

### Beispiel 1: Erfmdungsgemäße Sauerstoffreduktion

40 mg stickstoff-dotierte Kohlenstoffnanoröhrchen, hergestellt durch katalytische Zersetzung von Pyridin bei 650°C in einem Festbettreaktor, an einem Kobalt-Molybdän-Magnesiumoxid Katalysator (bestehend aus 19 Gew.-% Co, 4 Gew.-% Mo und 77 Gew.-% MgO), wurden zunächst in 50 ml Aceton dispergiert, nachdem Sie mittels Waschen in konzentrierter Salzsäurelösung von Katalysatorresten befreit worden sind, so dass eine erste Dispersion A erhalten wurde.

Die stickstoff-dotierten Kohlenstoffnanoröhrchen wurden zuvor mittels Elektronenspektroskopie zur Chemischen Analyse (ESCA; Firma ThermoFisher, ESCALab 220iXL; Methode nach Angaben des Herstellers) und mittels Transmissionselektronenmiükroskopie (TEM; Fa. FEI Gerätetyp: Tecnai20, Megaview III; Methode nach Angaben des Herstellers) untersucht.

Es wurde hierbei festegestellt, dass die stickstoff-dotierten Kohlenstoffnanoröhrchen einen Anteil von 6,5 Atom-% Stickstoff aufwiesen, dass sie ein Verhältnis von pyridinischem zu quarternärem Stickstoff von 2,88 aufwiesen, dass sie einen mittleren Durchmesser $d_{50}$ von etwa 10 nm und eine minimale Länge von etwa 150 nm aufwiesen, so dass sie ein Aspektverhältnis von größer 10 hatten.

Von der erhaltenen Dispersion A wurden 120 μl auf eine polierte Elektrodenoberfläche einer rotierenden Ringscheibenelektrode (Fa. Jaissle Elektronik GmbH) getropft.

Nach dem Verdampfen des Acetons wurden hierauf 10 μl eines gelösten sulfonierten Tetrafluorethylen-Polymers (Nafion®-Lösung; Fa. DuPont) in einer Konzentration von 26 mg/ml in Isopropanol zur Fixierung des in Dispersion A enthaltenen Feststoffs aufgetropft.

Die rotierende Ringscheibenelektrode, nun umfassend die Stickstoff-dotierten Kohlenstoffnanoröhrchen, wurde sodann als Arbeitselektrode in einer Laborzelle enthaltend 3 Elektroden (Arbeitselektrode, Gegenelektrode und Referenzelektrode) eingesetzt.

Der verwendete Aufbau ist dem Fachmann allgemein als Dreielektrodenanordnung bekannt. Als Elektrolyt umgebend die Arbeitselektrode wurde eine 1 molare NaOH-Lösung in Wasser eingesetzt, die zuvor mittels Durchleiten eines Gasstroms reinen Sauerstoffs mit Sauerstoff gesättigt wurde.

Als Referenzelektrode kam eine handelsübliche Ag/AgCI-Elektrode (Fa.: Mettler-Toledo) zum Einsatz.

Der Elektrolyt wurde auf 60°C erwärmt. Die Reduktion des im Elektrolyt molekular gelösten Sauerstoffs wurde ebenfalls bei dieser Temperatur, welche kontrolliert wurde, ausgeführt.

Nachfolgend wurde nun in Rereichen von +0,2 V bis -0,8 V, angelegt zwischen der Arbeitselektrode und der Referenzelektrode, der Verlauf des Grenzstroms vermessen. Der vorgenannte Bereich von +0,2 V bis -0,8 V wurde mit einer Geschwindigkeit von 10 mV/s überprüft.

Das Vermessen des vorgenannten Bereichs wurde analog mehrfach durchgeführt, wobei bei jedem neuen Versuch die Rotationsgeschwindigkeit der Ringscheibenelektrode variiert wurde.

Insgesamt wurden drei solcher Messungen bei 400, 900 und 1600 Umdrehungen der Ringscheibenelektrode pro Minute zur Darstellung im Koutecky-Levich-Diagramm der Fig. 1 ausgeführt.

Die Ergebnisse der Messung sind in Form eines Koutecky-Levich-Diagramms in Fig. 1 dargestellt. Aus der Steigung der linearen Approximation wird unter Verwendung der zuvor dargestellten Formeln (V) und (VI) für die Anzahl der im Verfahren übertragenen Elektronen n ein Wert von etwa 4,2 erhalten. Hieraus folgt, dass im Zuge der Reduktion des Sauerstoffs kein Wasserstoffperoxid gemäß der Reaktion nach Formel (I) gebildet wurde, was die vorgenannten Vorteile des Verfahrens zur Folge hat.

Beispielhaft ist ein einzelnes Vermessen aus dem oben genannte Koutecky-Levich-Diagramme erhalten werden in der Fig. 2 für eine Messung bei 3600 Umdrehungen der Ringscheibenelektrode pro Minute (A) im Vergleich zu der entsprechenden Messung aus dem Vergleichsbeispiel 1 (B) dargestellt.

Man erkennt hieran zum einen, dass bei Durchführung des erfindungsgemäßen Verfahrens im Zuge der Messung das Eintreten eines Stromflusses bereits bei einer angelegten Spannung von etwa -0,1 V gegenüber einer Ag/AgCI-Elektrode eintritt, wohingegen bei Durchführung des nicht erfindungsgemäßen Verfahrens dieser Stromfluss erst bei einer Spannung von etwa -0,2 V in signifikantem Maße eintritt. Damit tritt die Reduktion von Sauerstoff gemäß dem erfindungsgemäßen Verfahren in vorteilhafter Weise früher ein, als bei Verfahren nach dem Stand der Technik, was zu einer Einsparung von Energie für die elektrochemische Reduktion von Sauerstoff führt. Weiter ist der Fig. 2 zu entnehmen, dass der Grenzstrom für das erfindungsgemäße Verfahren etwa doppelt so hoch liegt wie jener des nicht erfindungsgemäßen Verfahrens. Dies liegt an der vorgenannten Übertragung von vier Elektronen gemäß der Formel (III) im erfindungsgemäßen Verfahren, wohingegen im nicht erfindungsgemäßen Verfahren nur zwei Elektronen gemäß der Formel (I) unter Bildung von Wasserstoffperoxid übertragen werden. Hiernach kann sich im Fall des nicht erfindungsgemäßen Verfahrens unter Anlegen einer noch höheren Spannung die weitere Reduktion von Wasserstoffperoxid gemäß der Formel (II) anschließen, was sich in der Fig. 2 in Form des weiteren Abknickens der Kurve bei einer Spannung von etwa 0,75 V andeutet. Implizit bedeutet dies aber auch, dass mit dem nicht erfindungsgemäßen Verfahren stets die Notwendigkeit des Anlegens einer höheren Spannung einhergeht, wenn eine ähnliche Ausbeute an doppelt negativ geladenen Sauerstoff-Ionen aus diesem Verfahren erhalten werden soll, wie im erfindungsgemäßen Verfahren. Damit sind solche Verfahren mindestens energetisch von starkem Nachteil und in direkter Folge auch wirtschaftlich nachteilig.

**Beispiel 2: Weitere erfindungsgemäße Sauerstoffreduktion**

Ein Versuch gleich zu jenem in Beispiel 1 wurde durchgeführt, mit dem einzigen Unterschied, dass anstelle der dort verwendeten stickstoff-dotierten Kohlenstoffnanoröhrchen nun stickstoff-dotierte Kohlenstoffnanoröhrchen, hergestellt durch katalytische Zersetzung von Pyridin bei 650°C in einem Festbettreaktor, an einem Katalysator entsprechend des Beispiels 1 der WO 2007 093 337, eingesetzt wurden. Es wurden außerdem noch Messungen bei einer Rotationsgeschwindigkeit der Ringscheibenelektrode von 2500 Umdrehungen pro Minute ausgeführt.

Die stickstoff-dotierten Kohlenstoffnanoröhrchen wurden zuvor mittels ESCA untersucht. Es wurde hierbei festgestellt, dass die stickstoff-dotierten Kohlenstoffnanoröhrchen einen Anteil von 3,8 Atom-% Stickstoff aufwiesen, und dass sie ein Verhältnis von pyrdinischem zu quarternärem Stickstoff von 2,79 aufwiesen.

Die Ergebnisse der Messung sind in Form eines Koutecky-Levich-Diagramms in Fig. 3 dargestellt. Aus der Steigung der linearen Approximation wird unter Verwendung der zuvor dargestellten Formeln (V) und (VI) für die Anzahl der im Verfahren übertragenen Elektronen $n$ ein Wert von etwa 3,6 erhalten. Hieraus folgt, dass im Zuge der Reduktion des Sauerstoffs kein Wasserstoffperoxid gemäß der Reaktion nach Formel (I) gebildet wurde, was die vorgenannten Vorteile des Verfahrens zur Folge hat.

**Beispiel 3: Noch weitere erfindungsgemäße Sauerstoffreduktion**

Ein Versuch gleich zu jenem in Beispiel 2 wurde durchgeführt, mit dem einzigen Unterschied, dass anstelle der dort verwendeten stickstoff-dotierten Kohlenstoffnanoröhrchen nun stickstoff-dotierte Kohlenstoffnanoröhrchen, hergestellt durch katalytische Zersetzung von Pyridin bei 650°C in einem Festbettreaktor, an einem Katalysator entsprechend des Beispiels 2 der WO 2007 093 337, verwendet wurden.

Die stickstoff-dotierten Kohlenstoffnanoröhrchen wurden zuvor mittels ESCA untersucht. Es wurde festegestellt, dass die stickstoff-dotierten Kohlenstoffnamoröhrchen einen Anteil von 5,8 Atom-% Stickstoff aufwiesen, und dass sie ein Verhältnis von pyrdinischem zu quarternärem Stickstoff von 1,61 aufwiesen.

Die Ergebnisse der Messung sind in Form eines Koutecky-Levich-Diagramms in Fig. 4 dargestellt. Aus der Steigung der linearen Approximation wird unter Verwendung der zuvor dargestellten Formeln (V) und (VI) für die Anzahl der im Verfahren übertragenen Elektronen $n$ ein Wert von etwa 4,1 erhalten. Hieraus folgt, dass im Zuge der Reduktion des Sauerstoffs kein Wasserstoffperoxid gemäß der Reaktion nach Formel (I) gebildet wurde, was die vorgenannten Vorteile des Verfahrens zur Folge hat.

**Vergleichsbeispiel 1: Nicht erfindungsgemäße Sauerstoffreduktion mit Ruß**

Ein Versuch gleich zu jenem in Beispiel 1 wurde durchgeführt, mit dem einzigen Unterschied, dass anstelle der dort verwendeten stickstoff-dotierten Kohlenstoffnanoröhrchen Ruß (Vulcan XC72, Fa. Cabot) verwendet wurde.

Der Vergleich zwischen diesem nicht erfindungsgemäßen Verfahren und dem erfindungsgemäßen Verfahren gemäß dem Beispiel 1 wird in Fig. 2 dargestellt, wobei die Unterschiede bereits im Rahmen des erfindungsgemäßen Beispiels 1 erläutert wurden.

**Vergleichsbeispiel 2: Weitere nicht erfindungsgemäße Sauerstoffreduktion mit anderen stickstoff-dotierten Kohlenstoffnanoröhrchen**

Ein Versuch gleich zu jenem in Beispiel 1 wurde durchgeführt, mit dem einzigen Unterschied, dass anstelle der dort verwendeten stickstoff-dotierten Kohlenstoffnanoröhrchen nun stickstoff-dotierte Kohlenstoffnanoröhrchen, verwendet wurden, welche gemäß ESCA ein Verhältnis von pyridinischem zu quarternären Stickstoff von 0,63 aufwiesen. Diese stickstoff-dotierten Kohlenstoffnanoröhrchen wurden durch katalytische Zersetzung von Pyridin bei 750°C in einem Festbettreaktor, an einem Katalysator entsprechend des Beispiels 2 der WO 2007 093 337 hergestellt.

Die Ergebnisse der Messung sind in Form von leeren Vierecken (V2) im Koutecky-Levich-Diagramm der Fig. 5 dargestellt. Aus der Steigung der linearen Approximation dieser Messdaten, welche als dünne gestrichelte Linie in der Fig. 5 ebenfalls dargestellt ist und mit V2 gekennzeichnet ist, wird unter Verwendung der zuvor dargestellten Formeln (V) und (VI) für die Anzahl der in dem Verfahren nach diesem Vergleichsbeispiel übertragenen Elektronen *n* ein Wert von etwa 2,2 erhalten.

Im Vergleich zu den erfindungsgemäßen Sauerstoffreduktionen gemäß der Beispiele 1 bis 3, welche in Form von jeweils durchgezogenen Linien (1, 2, 3), sowie in Form der gefüllten Kreise, Vierecke und Dreiecke (1, 2, 3) ebenfalls in der Fig. 5 dargestellt sind, erkennt man eine nur halb so große Steigung der linearen Approximation.

Hieraus folgt, dass im Zuge der Reduktion des Sauerstoffs gemäß dem hier durchgeführten Vergleichsbeispiel eine Reduktion gemäß der Formel (I) unter Bildung von Wasserstoffperoxid stattfindet, was aus den zuvor ausgeführten Gründen von Nachteil ist.

**Vergleichsbeispiel 3: Weitere nicht erfindungsgemäße Sauerstoffreduktion mit nicht stickstoff-dotierten Kohlenstoffnanoröhrchen**

Ein Versuch gleich zu jenem in Beispiel 1 wurde durchgeführt, mit dem einzigen Unterschied, dass anstelle der dort verwendeten stickstoff-dotierten Kohlenstoffnanoröhrchen nun handelsübliche Kohlenstoffnanoröhrchen (BayTubes®, Fa. BayTubes) verwendet wurden.

Die Ergebnisse der Messung sind in Form von leeren Kreisen (V3) im Koutecky-Levich-Diagramm der Fig. 5 dargestellt. Aus der Steigung der linearen Approximation dieser Messdaten, welche als dünne gestrichelte Linie in der Fig. 5 ebenfalls dargestellt ist und mit V3 gekennzeichnet ist, wird unter Verwendung der zuvor dargestellten Formeln (V) und (VI) für die Anzahl der in dem Verfahren nach diesem Vergleichsbeispiel übertragenen Elektronen n ein Wert von etwa 2,1 erhalten.

Im Vergleich zu den erfindungsgemäßen Sauerstoffreduktionen gemäß der Beispiele 1 bis 3, welche in Form von jeweils durchgezogenen Linien (1, 2, 3), sowie in Form der gefüllten Kreise, Vierecke und Dreiecke (1, 2, 3) ebenfalls in der Fig. 5 dargestellt sind, erkennt man eine nur halb so große Steigung der linearen Approximation.

Hieraus folgt, dass im Zuge der Reduktion des Sauerstoffs gemäß dem hier durchgeführten Vergleichsbeispiel eine Reduktion gemäß der Formel (I) unter Bildung von Wasserstoffperoxid stattfindet, was aus den zuvor ausgeführten Gründen von Nachteil ist.

## Patentansprüche

1. Verfahren zur elektrochemischen Reduktion molekularen Sauerstoffs zu doppelt negativ geladenen Sauerstoff-Ionen in Lösungen eines pH-Wertes größer oder gleich 8, **dadurch gekennzeichnet, dass** der molekulare Sauerstoff in solchen Lösungen mit stickstoff-dotierten Kohlenstoffnanoröhrchen mit einem Anteil an pyridinischem und quarternären Stickstoff unter Anlegen einer Spannung in Kontakt gebracht wird.

2. Verfahren nach Anspruch 1, **dadurch gekennzeichnet, dass** die stickstoff-dotierten Kohlenstoffnanoröhrchen einen Durchmesser von 3 bis 150 nm aufweisen.

3. Verfahren nach Anspruch 1, **dadurch gekennzeichnet, dass** die stickstoff-dotierten Kohlenstoffnanoröhrchen einen

Durchmesser von 4 bis 100 nm aufweisen.

4. Verfahren nach Anspruch 1, **dadurch gekennzeichnet, dass** die stickstoff-dotierten Kohlenstoffnanoröhrchen einen Durchmesser von 5 bis 50 nm aufweisen.

5. Verfahren nach einem der Ansprüche 1 bis 4, **dadurch gekennzeichnet, dass** die stickstoff-dotierten Kohlenstoffnanoröhrchen ein Aspektverhältnis von mindestens 2 aufweisen.

6. Verfahren nach einem der Ansprüche 1 bis 4 **dadurch gekennzeichnet, dass** die stickstoff-dotierten Kohlenstoffnanoröhrchen ein Aspektverhältnis von mindestens 5 aufweisen.

7. Verfahren nach einem der Ansprüche 1 bis 4, **dadurch gekennzeichnet, dass** die stickstoff-dotierten Kohlenstoffnanoröhrchen ein Aspektverhältnis von mindestens 10 aufweisen.

8. Verfahren nach einem der vorstehenden Ansprüche, **dadurch gekennzeichnet, dass** die stickstoff-dotierten Kohlenstoffnanoröhrchen pyridinischen und quarternären Stickstoff in einem Verhältnis größer oder gleich 1 aufweisen.

9. Verfahren nach Anspruch 8, **dadurch gekennzeichnet, dass** ie stickstoff-dotierten Kohlenstoffnanoröhrchen pyridinischen und quarternären Stickstoff in einem Verhältnis größer oder gleich 1,5 aufweisen.

10. Verfahren nach Anspruch 8, **dadurch gekennzeichnet, dass** ie stickstoff-dotierten Kohlenstoffnanoröhrchen pyridinischen und quarternären Stickstoff in einem Verhältnis größer oder gleich 2 aufweisen.

11. Verfahren nach einem der vorstehenden Ansprüche, **dadurch gekennzeichnet, dass** die stickstoff-dotierten Kohlenstoffnanoröhrchen einen Anteil von größer oder gleich 1 Atom-% Stickstoff aufweisen.

12. Verfahren nach einem der vorstehenden Ansprüche, **dadurch gekennzeichnet, dass** eine Spannung von +0,2 V bis -0,8 V, gemessen gegen eine Ag/AgCI-Referenzelektrode, angelegt wird.

13. Verwendung von stickstoff-dotierten Kohlenstoffnanoröhrchen mit einem Anteil an pyridinischem und quarternären Stickstoff zur Reduktion molekularen Sauerstoffs in wässrigen Lösungen eines pH-Werts größer als 8.

14. Elektrolysevorrichtung für die elektrochemische Reduktion von molekularem Sauerstoff zu doppelt negativ geladenen Sauerstoff Ionen, **dadurch gekennzeichnet, dass** sie einen ersten Elektrodenraum (1) gefüllt mit einer Lösung eines pH-Wertes größer oder gleich 8 umfasst, in dem sich eine Elektrode (1a) umfassend einen Anteil stickstoffdotierter Kohlenstoffnanoröhrchen mit einem Anteil an pyridinischem und quarternären Stickstoff befindet, die mit einer weiteren Elektrode (2a) in einem weiteren Elektrodenraum (2) elektrisch leitend über eine Spannungsquelle (3) verbunden ist und wobei sich zwischen dem ersten und dem weiteren Elektrodenraum eine Membran (4) befindet.

## Claims

1. Process for the electrochemical reduction of molecular oxygen to give oxygen ions having a double negative charge in solutions having a pH greater than or equal to 8, **characterized in that** the molecular oxygen in such solutions is brought into contact with nitrogen-doped carbon nanotubes having a proportion of pyridinic and quaternary nitrogen with application of a voltage.

2. Process according to Claim 1, **characterized in that** the nitrogen-doped carbon nanotubes have a diameter of 3 to 150 nm.

3. Process according to Claim 1, **characterized in that** the nitrogen-doped carbon nanotubes have a diameter of 4 to 100 nm.

4. Process according to Claim 1, **characterized in that** the nitrogen-doped carbon nanotubes have a diameter of 5 to 50 nm.

5. Process according to any of Claims 1 to 4, **characterized in that** the nitrogen-doped carbon nanotubes have an aspect ratio of at least 2.

6. Process according to any of Claims 1 to 4, **characterized in that** the nitrogen-doped carbon nanotubes have an aspect ratio of at least 5.

7. Process according to any of Claims 1 to 4, **characterized in that** the nitrogen-doped carbon nanotubes have an aspect ratio of at least 10.

8. Process according to any of the preceding claims, **characterized in that** the nitrogen-doped carbon nanotubes have pyridinic and quaternary nitrogen in a ratio greater than or equal to 1.

9. Process according to Claim 8, **characterized in that** the nitrogen-doped carbon nanotubes have pyridinic and quaternary nitrogen in a ratio greater than or equal to 1.5.

10. Process according to Claim 8, **characterized in that** the nitrogen-doped carbon nanotubes have pyridinic and quaternary nitrogen in a ratio greater than or equal to 2.

11. Process according to any of the preceding claims, **characterized in that** the nitrogen-doped carbon nanotubes have a proportion of greater than or equal to 1 atom% of nitrogen.

12. Process according to any of the preceding claims, **characterized in that** a voltage of +0.2 V to -0.8 V, measured against an Ag/AgCl reference electrode, is applied.

13. Use of nitrogen-doped carbon nanotubes having a proportion of pyridinic and quaternary nitrogen for the reduction of molecular oxygen in aqueous solutions having a pH greater than 8.

14. Electrolysis apparatus for the electrochemical reduction of molecular oxygen to give oxygen ions having a double negative charge, **characterized in that** it comprises a first electrode space (1) filled with a solution having a pH greater than or equal to 8, in which an electrode (1a) comprising a proportion of nitrogen-doped carbon nanotubes having a proportion of pyridinic and quaternary nitrogen is present, which electrode has an electrically conductive connection via a voltage source (3) to a further electrode (2a) in a further electrode space (2), a membrane (4) being present between the first and the further electrode space.

## Revendications

1. Procédé pour la réduction électrochimique d'oxygène moléculaire en ions oxygène à double charge négative dans des solutions ayant un pH supérieur ou égal à 8, **caractérisé en ce qu'**on met en contact l'oxygène moléculaire dans de telles solutions avec des nanotubes de carbone dopés à l'azote, ayant une teneur en azote pyridinique et azote quaternaire, avec application d'une tension.

2. Procédé selon la revendication 1, **caractérisé en ce que** les nanotubes de carbone dopés à l'azote ont un diamètre de 3 à 150 nm.

3. Procédé selon la revendication 1, **caractérisé en ce que** les nanotubes de carbone dopés à l'azote ont un diamètre de 4 à 100 nm.

4. Procédé selon la revendication 1, **caractérisé en ce que** les nanotubes de carbone dopés à l'azote ont un diamètre de 5 à 50 nm.

5. Procédé selon l'une quelconque des revendications 1 à 4, **caractérisé en ce que** les nanotubes de carbone dopés à l'azote présentent un rapport longueur-diamètre d'au moins 2.

6. Procédé selon l'une quelconque des revendications 1 à 4, **caractérisé en ce que** les nanotubes de carbone dopés à l'azote présentent un rapport longueur-diamètre d'au moins 5.

7. Procédé selon l'une quelconque des revendications 1 à 4, **caractérisé en ce que** les nanotubes de carbone dopés à l'azote présentent un rapport longueur-diamètre d'au moins 10.

8. Procédé selon l'une quelconque des revendications précédentes, **caractérisé en ce que** les nanotubes de carbone

dopés à l'azote comportent de l'azote pyridinique et de l'azote quaternaire en un rapport supérieur ou égal à 1.

**9.** Procédé selon la revendication 8, **caractérisé en ce que** les nanotubes de carbone dopés à l'azote comportent de l'azote pyridinique et de l'azote quaternaire en un rapport supérieur ou égal à 1,5.

**10.** Procédé selon la revendication 8, **caractérisé en ce que** les nanotubes de carbone dopés à l'azote comportent de l'azote pyridinique et de l'azote quaternaire en un rapport supérieur ou égal à 2.

**11.** Procédé selon l'une quelconque des revendications précédentes, **caractérisé en ce que** les nanotubes de carbone dopés à l'azote présentent une teneur en azote supérieure ou égale à 1 % en atomes.

**12.** Procédé selon l'une quelconque des revendications précédentes, **caractérisé en ce qu'**on applique une tension de +0,2 V à -0,8 V, mesurée par rapport à une électrode de référence Ag/AgCl.

**13.** Utilisation de nanotubes de carbone dopés à l'azote ayant une teneur en azote pyridinique et azote quaternaire, pour la réduction d'oxygène moléculaire dans des solutions aqueuses ayant un pH supérieur à 8.

**14.** Dispositif d'électrolyse pour la réduction électrochimique d'oxygène moléculaire en ions oxygène à double charge négative, **caractérisé en ce qu'**il comprend une première chambre d'électrode (1) remplie d'une solution ayant un pH supérieur ou égal à 8, dans laquelle se trouve une électrode (1a) comprenant une quantité de nanotubes de carbone dopés à l'azote ayant une teneur en azote pyridinique et azote quaternaire, qui est reliée à une autre électrode (2a) dans une autre chambre d'électrode (2) en connexion électrique par l'intermédiaire d'une source de tension (3) et une membrane (4) étant présente entre la première chambre d'électrode et la deuxième.

Fig. 1

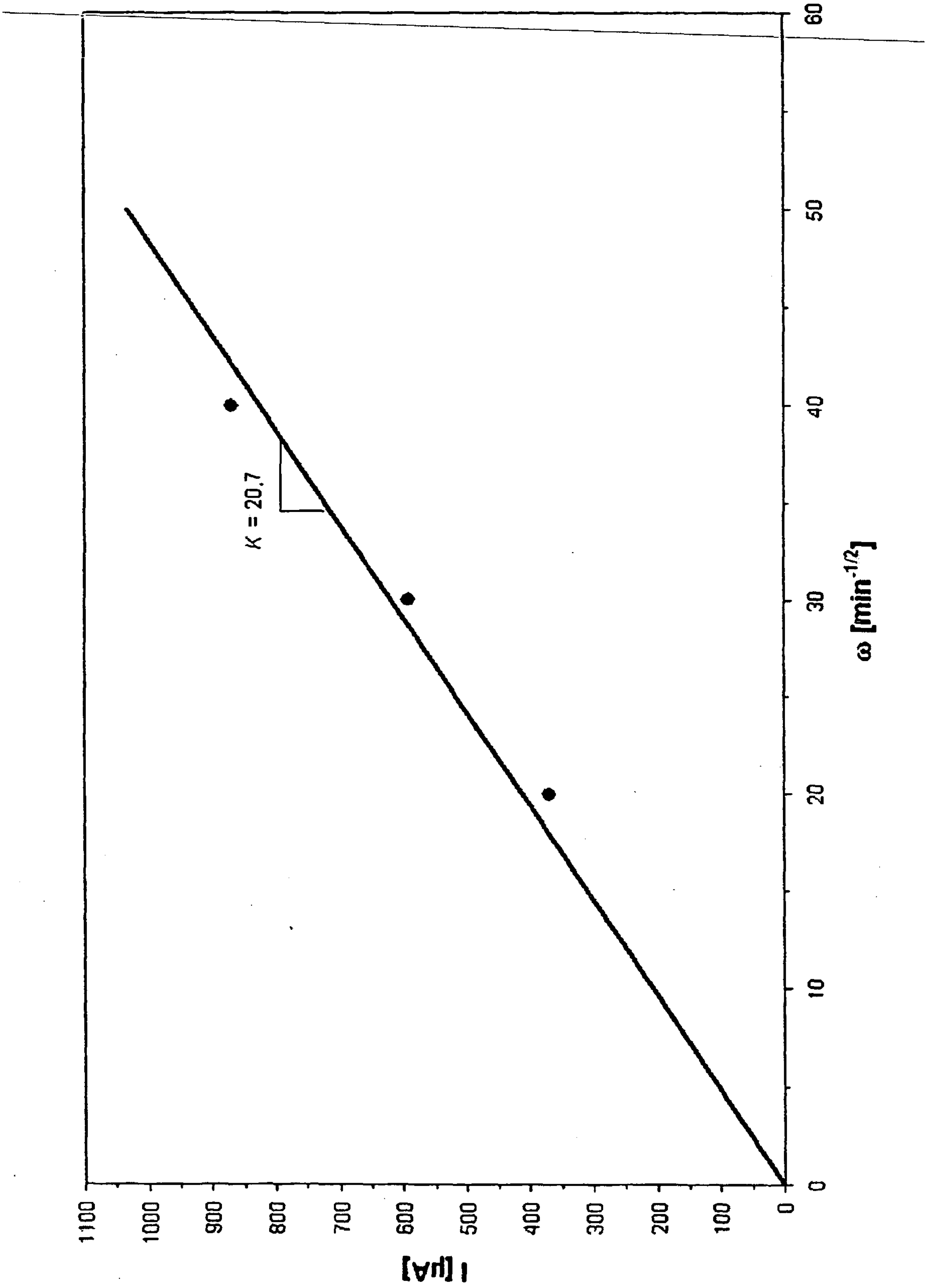

1100
1000
900
800
700
600
500
400
300
200
100
0
I [µA]
0
10
20
30
40
50
60
ω [min^-1/2]
K = 20.7

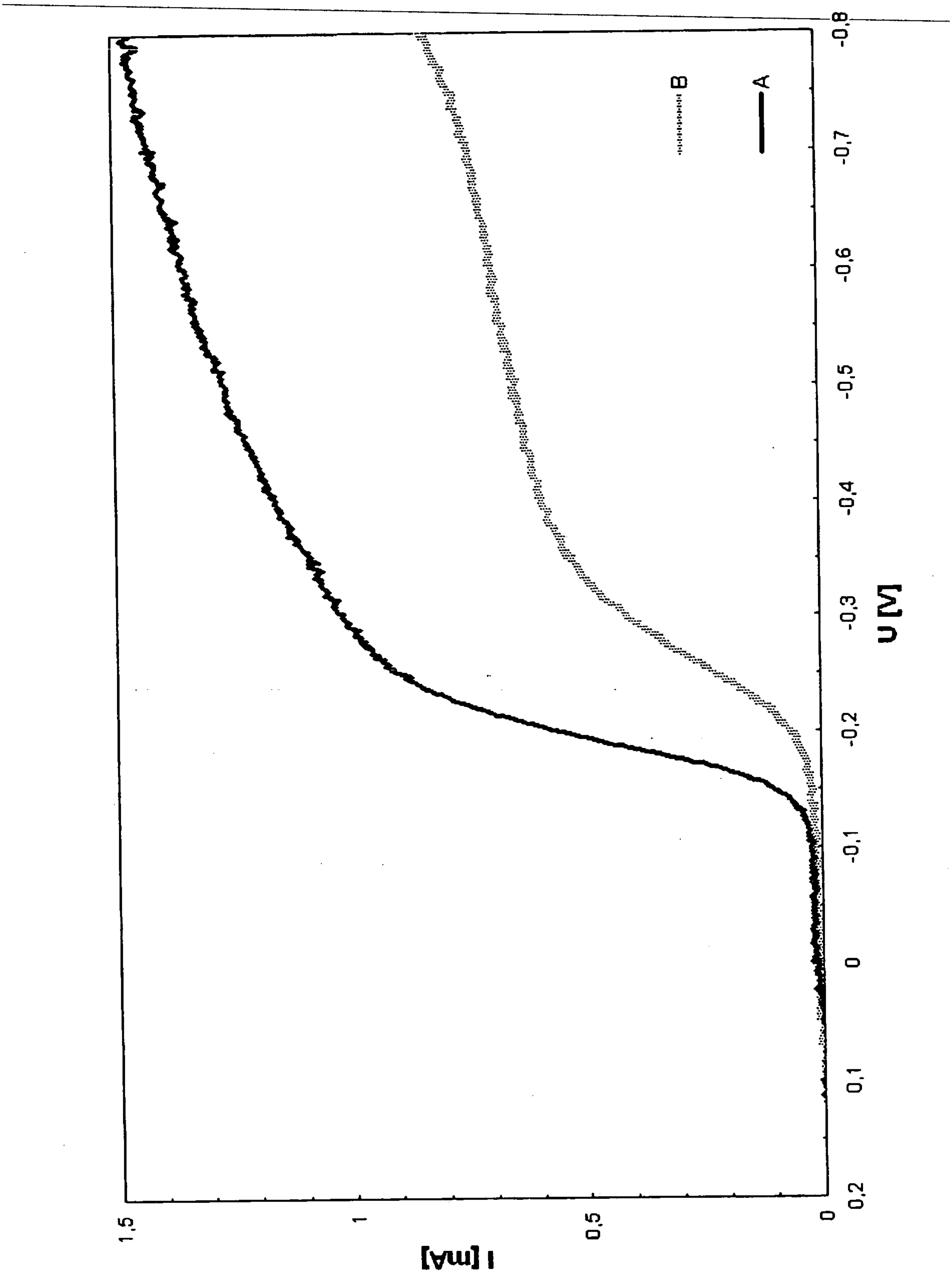


Fig. 2

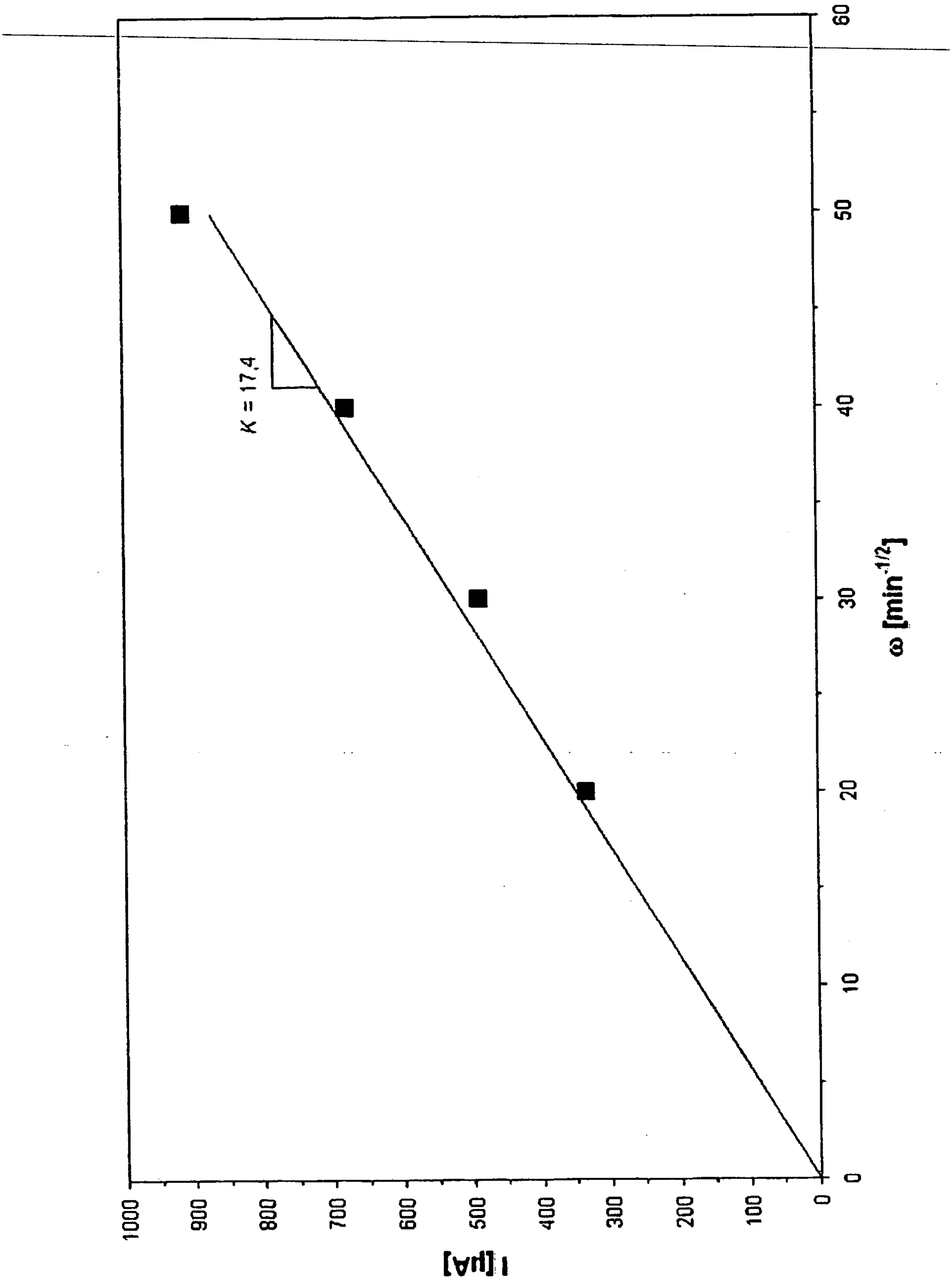

K = 17,4
I [µA]
0
100
200
300
400
500
600
700
800
900
1000
ω [min^-1/2]
0
10
20
30
40
50
60


Fig. 3

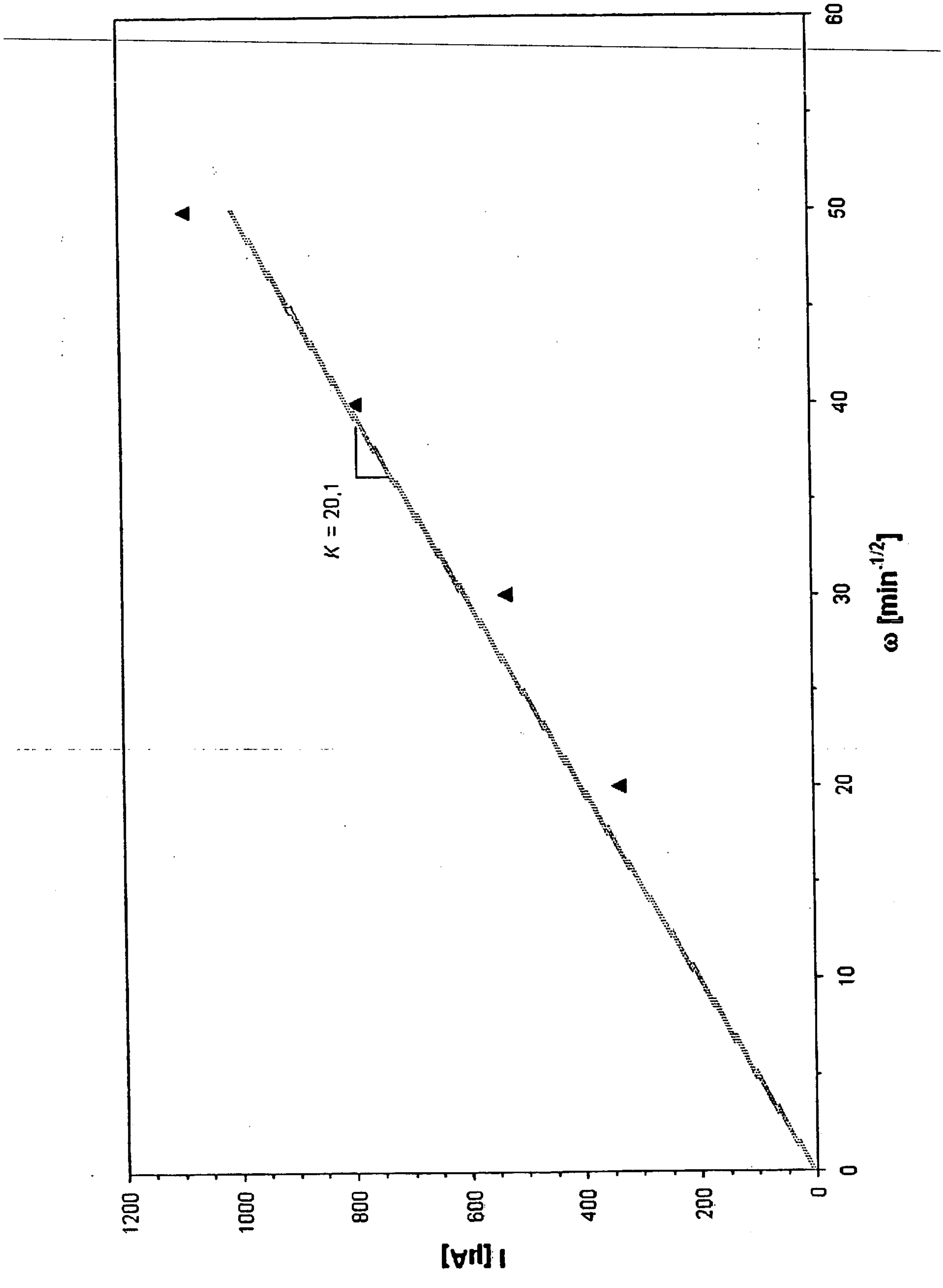


Fig. 4

Fig. 5

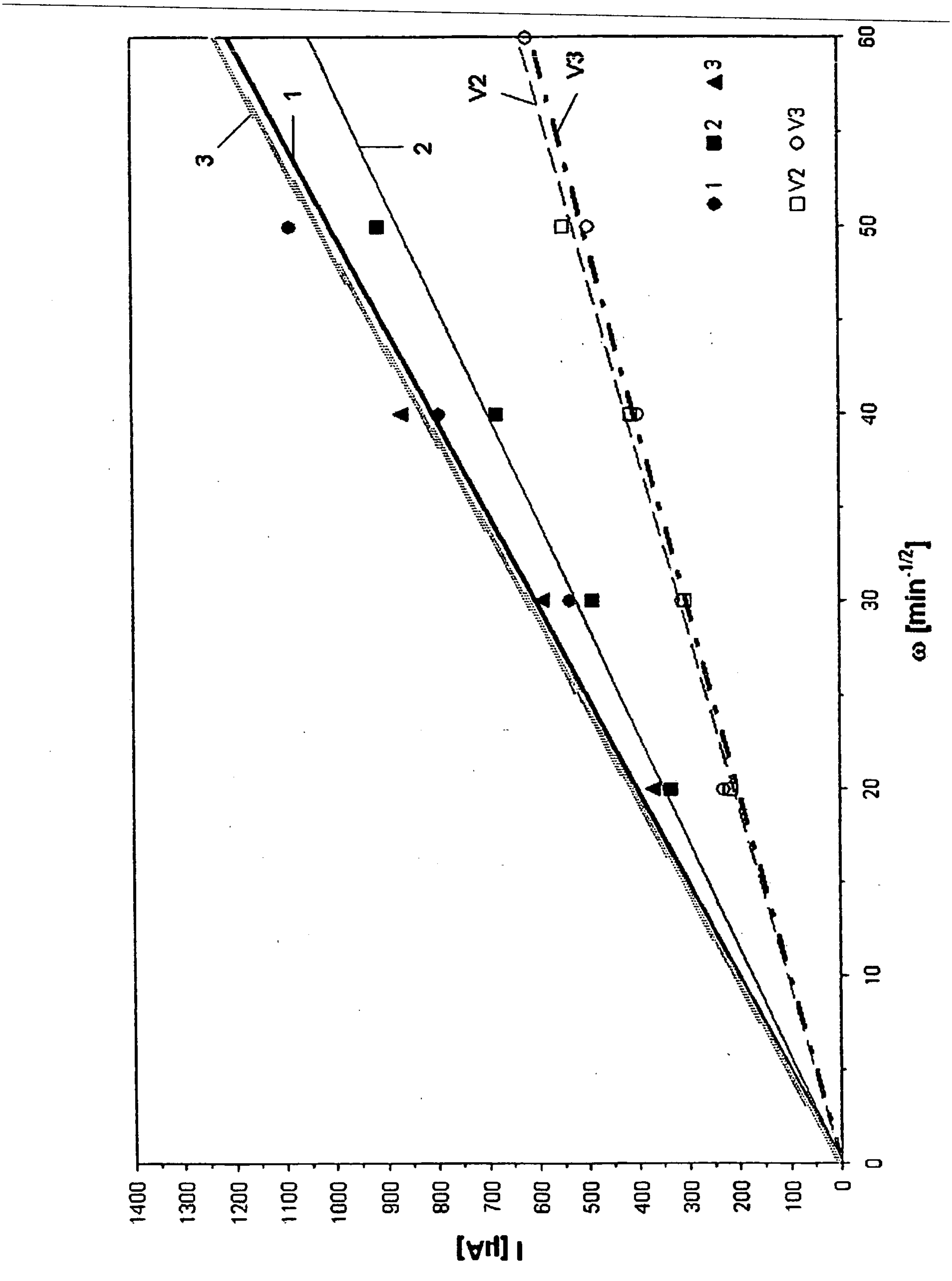
I [µA]
ω [min^-1/2]
1400
1300
1200
1100
1000
900
800
700
600
500
400
300
200
100
0
10
20
30
40
50
60
1
2
3
V2
V3
● 1 ■ 2 ▲ 3
□ V2 ○ V3

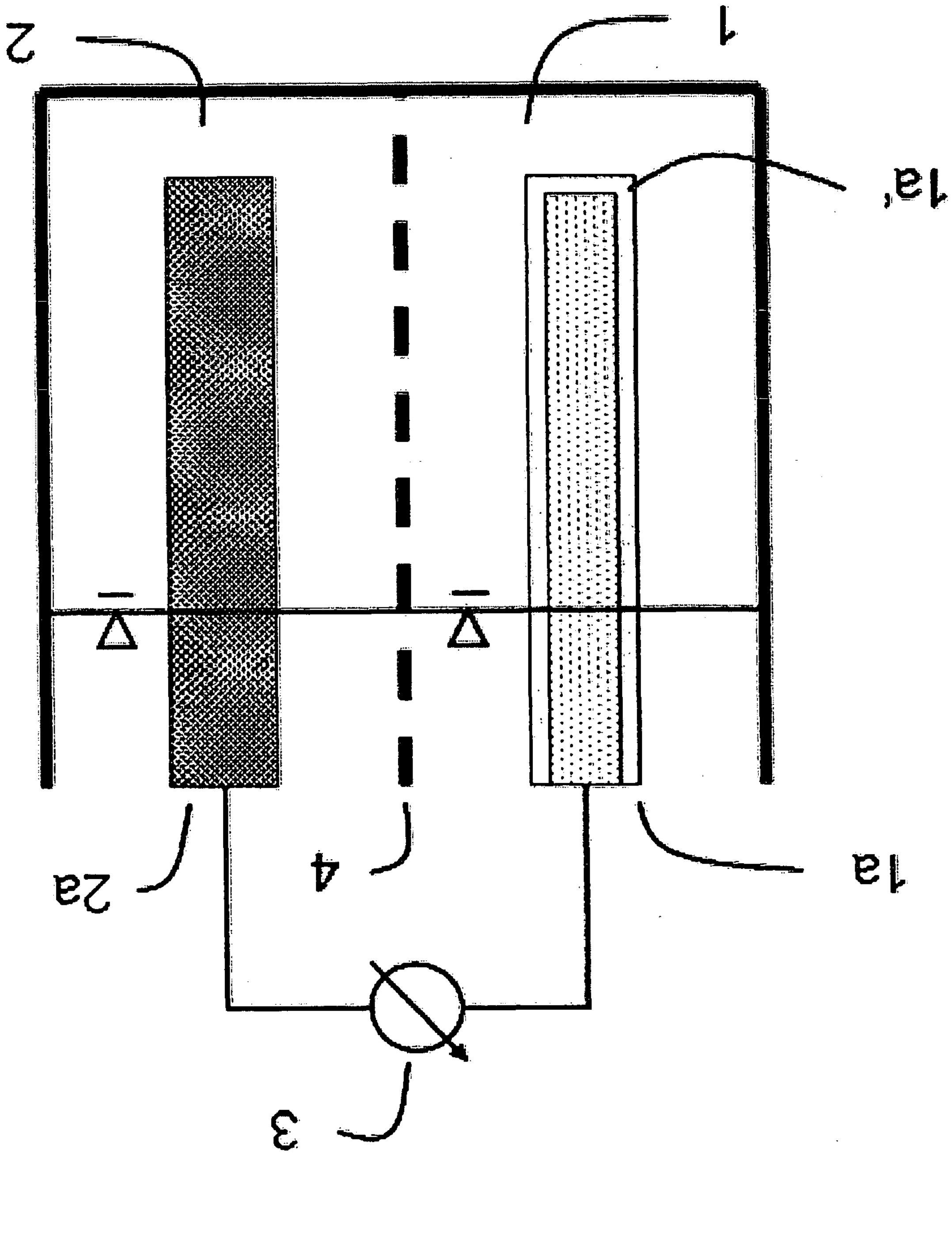


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102007062421
- WO 2007093337 A


### In der Beschreibung aufgeführte Nicht-Patentliteratur


- **O. ICHINOSE et al.** Effect of silver catalyst on the activity and mechanism of a gas diffusion type oxygen cathode for chlor-alkali electrolysis. *Journal of Applied Electrochemistry,* 2004, vol. 34, 55-59
- **L. LIPP.** Peroxide formation in a zero-gap chlor-alkali cell with an oxygendepolarized cathode. *Journal of Applied Electrochemistry,* 2005, vol. 35, 1015-1024
- **P. MATTER et al.** Oxygen reduction reaction activity and surface properties of nanostructured nitrogen-containing carbon. *Journal of Molecular Catalysis A: Chemical,* 2004, vol. 264, 73-81
- **Y. SHAO et al.** Nitrogen-doped carbon nanostructures and their composites as catalytic materials for proton exchange membrane fuel cell. *Applied Catalysis B: Environmental,* 2008, vol. 79, 89-99
- **S. MALDONADO et al.** Influence of Nitrogen Doping on Oxygen Reduction Electrocatalysis at Carbon Nanofiber Electrodes. *Journal of Physical Chemistry B,* 2005, vol. 109, 4707-4716